# EUROPÄISCHE PATENTSCHRIFT

(11) **EP 2 903 817 B1**
(45) Veröffentlichungstag und Bekanntmachung des Hinweises auf die Patenterteilung: **25.03.2020**
(21) Anmeldenummer: 12772747.7
(22) Anmeldetag: 04.10.2012
(51) Int. Cl.: B32B 5/18, A47L 15/42, B32B 11/08, G10K 11/165, G10K 11/168

(54) **SCHALLDÄMPFENDE SANDWICHPLATTE**
SOUND DAMPENING SANDWICH SHEET
PLAQUE INSONORISANTE DU TYPE SANDWICH

(43) Veröffentlichungstag der Anmeldung: 12.08.2015
(73) Patentinhaber: Sika Technology AG, 6340 Baar (CH)
(72) Erfinder: POLAK, Josef, 55294 Bodenheim (DE); HARDT, Christian, 65451 Kelsterbach (DE); VIDOVIC, Rudolf, 67227 Frankenthal (DE); OBST, Heike-Ursula, 67551 Worms (DE); GRAF, Torsten, 67599 Gundheim (DE)
(74) Vertreter: Sika Patent Attorneys
(86) Internationale Anmeldenummer: PCT/EP2012/069593
(87) Internationale Veröffentlichungsnummer: WO 2014/053179

(56) Entgegenhaltungen:
- EP-A1- 1 693 190
- EP-A1- 2 554 091
- EP-A2- 0 466 513
- EP-A2- 1 323 523
- WO-A1-2011/080195
- KIM J K ET AL: "Forming and failure behaviour of coated, laminated and sandwiched sheet metals: a review", JOURNAL OF MATERIALS PROCESSING TECHNOLOGY, ELSEVIER, NL, Bd. 63, Nr. 1-3, 1. Januar 1997 (1997-01-01), Seiten 33-42, XP026545283, ISSN: 0924-0136, DOI: 10.1016/S0924-0136(96)02596-4 [gefunden am 1997-01-01]
- "Elastizität", Römpp online 4.0 , March 2002 (2002-03), Retrieved from the Internet: URL:https://roempp.thieme.de/roempp4.0/do/ data/RD-05-00586 [retrieved on 2017-09-08]

## Beschreibung

Die Erfindung betrifft eine schalldämpfende Sandwichplatte gemäß dem Oberbegriff des Anspruchs 1, sowie Verfahren zum Anbringen einer schalldämpfenden Sandwichplatte an einem akustisch zu verbessernden Bauteil gemäß dem Oberbegriff des Anspruchs 11 oder 12.

Eine derartige Sandwichplatte, die auch als schalldämmende Sandwichplatte bezeichnet werden kann, ist in der EP 0 933 194 A2 offenbart. Eine derartige schalldämpfende Sandwichplatte mit einer Schalldämpfungsschicht und einer Entdröhnschicht kann auf vielfache Weise zur Verbesserung der akustischen Eigenschaften von Bauteilen eingesetzt werden. Hierzu gehört beispielsweise das Entdröhnen eines Bodenblechs, von Seitenwänden oder des Dachbereichs eines Kraftfahrzeugs und das Entdröhnen der Wandungen eines Haushaltsgeräts. In der Regel wird eine derartige Sandwichplatte mit ihrer Entdröhnschicht auf das akustisch zu verbessernde Bauteil, wie beispielsweise ein Bodenblech oder einen Spülbottich, geklebt.

Bei KfZ oder Haushaltsgeräten tritt beispielsweise das Problem auf, dass die meist aus Blech bestehenden Oberflächen der flächigen Gehäuseteile zu erheblichen Eigenschwingungen angeregt werden, so dass eine Schwingungsdämpfung unverzichtbar ist.

Im Kraftfahrzeugbereich wird immer mehr eine gute Wärmeisolierung bestimmter Bereiche unter gleichzeitiger Schallisolierung bzw. Entdröhnung zur Beseitigung unerwünschter Schwingungen gefordert. Insbesondere bei elektrisch angetriebenen Fahrzeugen besteht häufig auch die Forderung, dass entsprechende Entdröhn-, Schalldämpfungs- oder -dämmungs- und Entdröhnschichten möglichst leicht sein sollen, ohne dass deren Eigenschaften beeinträchtigt werden.

Der Erfindung liegt die wesentliche Aufgabe zugrunde, die eingangs genannte schalldämpfende Sandwichplatte so weiterzubilden, dass ihre entdröhnende Wirkung bei geringst möglichem Gewicht verbessert werden kann, sowie Verfahren zur Anbringung derartiger Sandwichplatten an einem akustisch zu verbessernden Bauteil anzugeben.

Diese Aufgabe wird erfindungsgemäß mit einer schalldämpfenden Sandwichplatte gemäß Anspruch 1 und einem Verfahren nach Anspruch 11 oder 12 gelöst. Vorteilhafte Weiterbildungen der Erfindung sind Gegenstand der abhängigen Ansprüche.

Erfindungsgemäß weist die schalldämpfende Sandwichplatte eine der Schalldämpfung und/oder der Schalldämmung dienende erste Schicht sowie eine der Entdröhnung und thermischen Isolierung dienende zweite Schicht auf. Die zweite Schicht ist dabei mit einer Flächenseite, die als erste Hauptseite bezeichnet wird, mit der ersten Schicht fest verbunden. Die zweite Flächenseite (als zweite Hauptseite bezeichnet) der zweiten Schicht ist dagegen dafür bestimmt, mit dem Bauteil verbunden zu werden, das akustisch zu verbessern, also hinsichtlich der Schallausbreitung zu bedämpfen bzw. zu dämmen, ist. Die vorliegende Erfindung zeichnet sich dadurch aus, dass die zweite Schicht eine ggf. mit Hohlräumen ausgestatte Bitumen-Kunststoff-Schaumschicht mit einer Dichte von 0,25 bis 0,5 kg/dm3 und insbesondere von 0,3 kg/dm3 ist. Bei den Hohlräumen kann es sich um geschlossene oder offene oder um eine durchgehende Perforation handeln.

Die Entdröhnschicht kann auch zusätzlich thermisch isolierende Eigenschaften haben und wird in diesen Fällen auch als Thermoisolierschicht bezeichnet. Die entdröhnende Wirkung wird natürlich durch den Gesamtaufbau der Sandwichplatte erzielt, wobei die vorliegende Erfindung im Wesentlichen auf eine Verbesserung der zweiten Schicht abzielt, sowie deren Verbindung mit der ersten Schicht und dem Bauteil durch geeignete Klebverbindungen.

Gemäß einer vorteilhaften Weiterbildung der Erfindung weist die zweite Schicht einen Elastizitätsmodul im Bereich von 2000 bis 4000 N/mm2, vorzugsweise im Bereich von 2500 bis 3500 N/mm2 und insbesondere etwa 3000 N/mm2 auf. Dadurch wird die Übertragung von Schwingungen bzw. Bewegungsenergie vom Bauteil auf weiter außen gelegene Schichten verbessert. Es kann hierbei für die Optimierung von Vorteil sein, wenn die erste Schicht einen Elastizitätsmodul aufweist, der mindestens um den Faktor 10, vorzugsweise mindestens um den Faktor 20, größer ist als der Elastizitätsmodul der zweiten Schicht.

Es ist bevorzugt, dass die erste Schicht mindestens eine Lage aus Aluminium oder eine thermoplastische (wie z.B. Harz oder PS) bzw. thermoreaktive (wie z.B. Epoxiharz) Versteifungsschicht von 0,05 bis 0,5 mm, vorzugsweise 0,05 bis 0,15 mm Dicke, besonders bevorzugt 0,10 - 0,15 mm oder eine Bitumenfolie bzw. Kunststofffolie von 0,05 bis 0,5 mm, vorzugsweise 1,5 bis 3,0 mm Dicke aufweist.

Eine besonders vorteilhafte Variante der Erfindung besteht darin, dass die Sandwichplatte ein Flächengewicht von höchstens 2,5 kg/m2, vorzugsweise höchstens 2 kg/m2 und insbesondere etwa 1,5 kg/m2, aufweist.

Einen besonders guten Kompromiss zwischen Platzbedarf der Sandwichplatte und guten Entdröhn- bzw. thermischen Isolationseigenschaften kann man erzielen, wenn die Sandwichplatte eine Dicke von höchstens 5 mm, vorzugsweise höchstens 4 mm und insbesondere etwa 3,4 mm, aufweist. Hierbei weist mit Vorteil die zweite Schicht eine Dicke im Bereich von 2 bis 5 mm, vorzugsweise im Bereich von 2,5 bis 3,5 mm und insbesondere etwa 3 mm, auf.

Bei der erfindungsgemäßen Sandwichplatte weist die zweite Schicht vorzugsweise Hohlkugeln, insbesondere mit Luft gefüllte Hohlkugeln, auf, wodurch sich die Entdröhnwirkung wesentlich verbessert, sich aber gleichzeitig auch die thermischen Isolationseigenschaften verbessern lassen und das Gewicht gering gehalten werden kann. Dies ist eine Variante der geschlossenen Hohlräume. Falls die Hohlkugeln teilweise offen sind, so sind dies offene Hohlräume.

Bei den nachstehenden %-Angaben von Materialzusammensetzungen handelt es sich jeweils um Angaben in Gewichts-%, außer wenn es anders angegeben ist.

Es kann von Vorteil sein, die Sandwichplatte so auszugestalten, dass die zweite Schicht 50 % Bitumen, 35 % Silikat-Hohlkugeln, 5,0 % Zellulosefaser, 5,0 % Calciumoxid und 5,0 % Ethylenvinylacetat (EVA) aufweist oder dass die zweite Schicht Polystyrol und/oder Polyvinylacetat und/oder PE und/oder PP und/oder Ethylenvinylacetat, insbesondere aus 40 % Polystyrol, 30 % Silikat-Hohlkugeln, 10 % Zellulosefasern, 19 % Weichmacher und 1,0 % Stabilisator, aufweist.

Weiterhin kann es Vorteile bringen, wenn bei der Ausgestaltung der Sandwich-platte die zweite Schicht eine Akustikfolie aus ca. 50 % Bitumen, ca. 10 % Sepiolith, ca. 5 % Silikat-Hohlkugeln, ca. 30 % Ethylenvinylacetat (EVA) und ca. 5 % Calciumoxid aufweist und/oder eine Bitumen-Leichtfolie aus ca. 40 % Bitumen, ca. 20 % Calciumcarbonat, ca. 2,0 % Sepiolith, ca. 20 % Glimmer, ca. 10 % Silikat-Hohlkugeln, ca. 5 % Ethylenvinylacetat (EVA) und ca. 3 % Calciumoxid aufweist.

Ferner kann die entdröhnende Wirkung und können die Wärmeisolationseigenschaften verbessert werden, indem der zweiten Schicht leichte Füllstoffe zugegeben werden, wodurch das spezifische Gewicht der zweiten Schicht reduziert werden kann. Als Füllstoffe können beispielsweise thermoplastische Kunststoffhohlkörper, die thermisch expandieren oder duroplastische Kunststoffhohlkörper verwendet werden, es sind aber auch Silikat-Hohlkugeln, gemahlene, offen- oder geschlossenzellige, thermoplastische oder vernetzte PE- oder PU-Hart- oder Weichschäume zu nennen.

Es kann vorteilhaft sein, wenn die zweite Schicht zusätzlich Thermoplaste, vorzugsweise EVA, PE, PP, und/oder Kohlenwasserstoff-Harze enthält.

Es kann außerdem von Vorteil sein, wenn eine die erste Schicht und die zweite Schicht verbindende erste Kleberschicht und eine an der zweiten Hauptseite der zweiten Schicht angebrachte erfindungsgemäße zweite Kleberschicht zur Verbindung mit dem zu verbessernden Bauteil vorgesehen ist. Dadurch kann in den beiden Kleberschichten Bewegungsenergie durch Reibung in Wärme umgewandelt werden.

Es kann außerdem vorteilhaft sein, wenn die erste Schicht eine thermoplastische oder thermoreaktive, insbesondere faserverstärkte Versteifungsschicht, insbesondere aus Epoxid-, Phenol- oder Formaldehyd-Harz oder Polystyrol, ist.

Durch geeignete Wahl der vorgenannten Parameter und Materialien können die Schalldämpfungs- bzw. -dämmungseigenschaften, d.h. die Entdröhnwirkung optimiert und individuell an die jeweiligen technischen Erfordernisse, beispielsweise die gegebenen Platzverhältnisse oder die zu entdröhnende Eigenfrequenz des Bauteils, angepasst werden.

Für die vorgenannten erfindungsgemäßen Sandwichplatten ist festzuhalten, dass sie bei gleicher akustischer Performance (also Entdröhnungsvermögen) nur etwa 50 % des Gewichts einer herkömmlichen Sandwichplatte aufweisen. Anders dimensioniert kann auch erreicht werden, dass eine erfindungsgemäße Sandwich-platte 10 sogar eine höhere akustische Performance bei geringerem Gewicht erzielen kann.

Die der Erfindung zugrundeliegende Aufgabe wird auch mit einer Entdröhnschicht und einer Schalldämpfungs- und/oder Schalldämmungsschicht gelöst, die Bestandteil einer erfindungsgemäßen Sandwichplatte sind.

Die der Erfindung zugrundeliegende Aufgabe wird ferner mit Verfahren zum Anbringen einer schalldämpfenden Sandwichplatte an einem akustisch zu verbessernden Bauteil gemäß einem der Ansprüche 11 oder 12 gelöst.

Weitere Vorteile, Merkmale und Besonderheiten der Erfindung ergeben sich aus der nachfolgenden ausführlichen Beschreibung verschiedener Ausführungsformen von erfindungsgemäßen Sandwichplatten. Es zeigen:
Fig. 1 im Querschnitt eine vorteilhafte Ausführungsform einer erfindungsgemäßen Sandwichplatte,
Fig. 2 ein Diagramm des akustischen Verlustfaktors der Ausführungsform von Fig. 1 und
Fig. 3 im Querschnitt eine Darstellung der vorgenannten Ausführungsform zur Erläuterung eines Vorteils der erfindungsgemäßen Sandwichplatte.

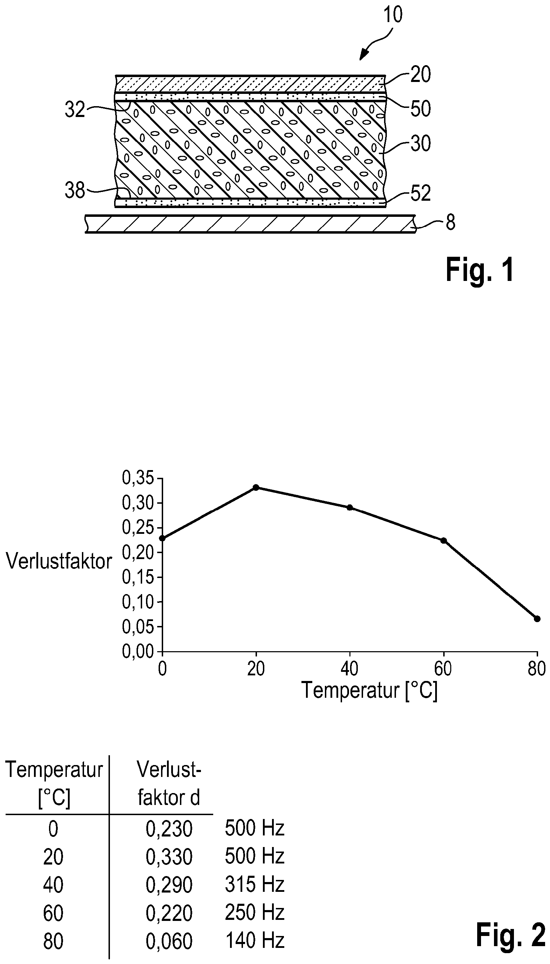

Fig. 1 zeigt im Querschnitt eine vorteilhafte Ausführungsform einer erfindungsgemäßen schalldämpfenden bzw. schalldämmenden Sandwichplatte 10, die nachstehend der Einfachheit halber nur als Sandwichplatte bezeichnet wird. Die Sandwichplatte 10 ist zum Aufbringen auf ein hier nur schematisch dargestelltes Bauteil 8 bestimmt. Die Sandwichplatte 10 umfasst eine erste, hier oben dargestellte, Schicht 20, welche der Schalldämpfung und/oder Schalldämmung dient. An der ersten Schicht 20 ist eine zweite Schicht 30 direkt oder mittels einer dazwischen liegenden ersten Kleberschicht 50, die beispielsweise aus einem Haftkleber sein kann, befestigt. Stattdessen kann aber auch beispielsweise ein Heißschmelzkleber verwendet werden. Die Befestigung der zweiten Schicht 30 an der ersten Schicht 20 erfolgt dabei über die erste Hauptseite 32 der zweiten Schicht 30, also über die hier oben dargestellte Flächenseite. An der zweiten Hauptseite 38 der zweiten Schicht 30 (also hier unten dargestellt) ist die zweite Schicht 30 erfindungsgemäß mit einer weiteren, zweiten Kleberschicht 52, die ebenfalls beispielsweise ein Haftkleber oder ein Heißschmelzkleber sein kann, versehen. Mit Hilfe dieser zweiten erfindungsgemäßen Kleberschicht 52 wird die zweite Schicht 30 auf ein Bauteil 8 geklebt, welches akustisch zu verbessern ist bzw. bei dem eine Schalldämpfung vorzunehmen ist.

Erfindungsgemäß zeichnet sich diese Sandwichplatte 10 dadurch aus, dass die zweite Schicht 30 eine Bitumen-Kunststoff-Schaumschicht mit einer Dichte von 0,3 kg/dm3 ist. Dadurch wird das spezifische Gewicht und damit das Gesamtgewicht der Sandwichplatte 10 reduziert. Es hat sich gezeigt, dass sich durch eine solche Dichte besonders gute Entdröhneigenschaften der Sandwichplatte insgesamt erzielen lassen (vgl. Fig. 2).

Die zweite Schicht 30 ist mit Vorteil 3 mm dick - wobei die Dicke in Richtung von dem Bauteil 8 zur ersten Schicht 20 hin gemessen wird - und weist einen Elastizitätsmodul von etwa 3000 N/mm2 auf. Die erste Schicht 20 ist mit Vorteil aus 0,15 mm dickem Aluminium gebildet und weist einen Elastizitätsmodul von 71.000 N/mm² auf. Alternativ könnte für die erste Schicht 20 auch ein entsprechender Kunststoff verwendet werden. Zusammen mit den beiden Kleberschichten 50, 52 ergibt sich eine Sandwichplatte 10 mit einer Gesamtdicke von 3,4 mm und einem Flächengewicht von 1,5 kg/m².

Die Bitumen-Kunststoff-Schaumschicht 30 kann beispielsweise ca. 50 % Bitumen, ca. 35 % Silikat-Hohlkugeln, ca. 5,0 % Zellulosefaser, ca. 5,0 % Calciumoxid und ca. 5,0 % Ethylenvinylacetat (EVA) aufweisen; alternativ kann sie z.B. Polystyrol und/oder Polyvinylacetat und/oder PE und/oder PP und/oder Ethylenvinylacetat, insbesondere aus ca. 40 % Polystyrol, ca. 30 % Silikat-Hohlkugeln, ca. 10 % Zellulosefasern, ca. 19 % Weichmacher und ca. 1,0 % Stabilisator aufweisen.

Der zweiten Schicht 30 werden mit Vorteil Expansionsmittel in Form leichter Füllstoffe zugegeben, wodurch das spezifische Gewicht der zweiten Schicht reduziert werden kann. Als Expansionsmittel können beispielsweise thermisch expandierende thermoplastische oder duroplastische Kunststoffkörper verwendet werden, vorteilhaft sind aber beispielsweise auch expandierte Kunststoff-hohlkörper, Silikat-Hohlkugeln, gemahlene, offen- oder geschlossenzellige, thermoplastische oder vernetzte PE- oder PU-Hart- oder Weichschäume zu nennen. Dadurch lassen sich Hohlräume in der zweiten Schicht herstellen, wodurch sich das spezifische Gewicht reduziert.

Es kann vorteilhaft sein, wenn die zweite Schicht 30 Thermoplaste, wie z.B. EVA, PE, PP, und/oder Kohlenwasserstoff-Harze enthält.

Der akustische Verlustfaktor d einer derartigen Sandwichplatte 10 ist in Fig. 2 in Abhängigkeit von der Temperatur für verschiedene Frequenzen, die in der tabellarischen Aufstellung rechts neben den d-Werten angegeben sind, dargestellt. Das standardisierte ISO-Verfahren zur Charakterisierung der Materialeigenschaften von Antidröhnbelägen ist bekanntlich das Verfahren nach Oberst. Das Messverfahren besteht darin, einen streifenförmigen Probenkörper mit rechteckigem Querschnitt zu Biegeschwingungen anzuregen. Der Probekörper wird dazu vertikal hängend einseitig am oberen Ende fest eingespannt. Das untere freie Ende wird mittels eines Schwingerregers induktiv angeregt. Aus dem Resonanzverhalten des Probenkörpers werden Kenngrößen, die die Dämpfungseigenschaften beschreiben, z. B. der Verlustfaktor d, abgeleitet. Auf diese Weise erhält man Werte für die Resonanzfrequenzen, für alle anderen Frequenzen wird linear inter- bzw. extrapoliert.

Wie aus dem Diagramm und der Tabelle von Fig. 2 ersichtlich, nimmt dabei der Verlustfaktor d für 500 Hz bei einer Temperatur von 0°C vom Wert 0,230 bis zu einem Wert von 0,33 für eine Temperatur von 20°C zu, wonach er für eine Temperatur von 80°C bei 140 Hz auf einen Wert von 0,060 abfällt. Eine derartige Sandwichplatte 10 kann in vorteilhafter Weise im Fahrzeugbau manuell, mittels Handhabungsvorrichtungen - also halbautomatisch - oder mittels Roboterapplikation, eingesetzt werden.

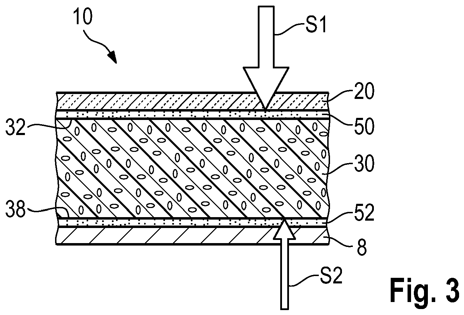

In Fig. 3 ist ein Vorteil der vorliegenden erfindungsgemäßen Sandwichplatte 10 gesondert dargestellt. Mit dem dicken oberen Pfeil S1 ist exemplarisch eine von oben auf die Sandwichplatte 10 einwirkende große Scherkraft bezeichnet, während mit dem dünneren unteren Pfeil S2 eine von unten auf die Sandwich-platte 10 einwirkende, kleinere Scherkraft bezeichnet ist. Das Bauteil 8, von dem angenommen wird, dass es schwingt und somit entdröhnt werden soll, überträgt Schwingungsenergie auf die erfindungsgemäße zweite (untere) Kleberschicht 52. In der Kleberschicht 52 wird ein Teil der Bewegungs- bzw. Schwingungsenergie durch Reibung in Wärme umgewandelt. Ein weiterer Teil der Schwingungsenergie wird von der zweiten Schicht 30, da sie relativ schubsteif ist bzw. einen relativ hohen Elastizitätsmodul von 3000 N/mm2 aufweist, auf die erste Kleberschicht 50 übertragen, in der ebenfalls Schwingungsenergie durch Reibung in Wärme umgewandelt wird. Hierdurch wird das Schalldämpfungs- bzw. -dämmungsverhalten verbessert. Aus der vorstehenden Beschreibung ist ersichtlich, dass die aus Bitumen-Kunststoff-Schaum gebildete zweite Schicht 30 als schubsteifer Abstandshalter dient.

Der Verlustfaktor der zweiten Schicht 30 beträgt 0,02. Sowohl der Verlustfaktor als auch der Elastizitätsmodul wurden dabei mit einer 3 mm dickem Bitumen-Kunststoff-Schaumschicht auf 1 mm Stahl gemäß dem Oberst-Verfahren gemessen.

Die beschriebenen Sandwichplatten können selbstverständlich auch in einer Vielzahl von anderen Anwendungen mit Vorteil eingesetzt werden. Eine Übersicht über bevorzugte Einsatzgebiete verschiedener erfindungsgemäßer Sandwichplatten ist als Tabelle 1 beigefügt.

Für die Anbringung einer erfindungsgemäßen Sandwichplatte an verschiedenen Flächen eines Bauteils gibt es u.a. folgende vorteilhafte Vorgehensweisen:

### 1. Applikation auf planen Flächen:

Eine schalldämpfende Sandwichplatte 10 mit einer ersten Schicht 20 aus Aluminium, Stahl oder faserverstärktem Kunststoff (FVK) und mit einer bevorzugten Dicke von etwa 0,05 - 0,5 mm und einer zweiten Schicht 30 wird mit einer Haftkleber- oder Heißschmelzkleberschicht 52 an der planen Fläche des Bauteils 8 befestigt. Die Schichten 20 und 30 sind untereinander mit einer Kleberschicht verbunden 50 oder übereinander kaschiert ohne Kleber.

### 2. Applikation auf Flächen mit Konturen (Sicken):

Eine schalldämpfende Sandwichplatte 10 weist eine erste Schicht 20 aus einem thermoplastischen oder thermoreaktiven Material (Harz, PS) und ei-ner bevorzugten Dicke von ca. 0,05 - 1 mm auf. Die erste Schicht dient da-bei insbesondere als Versteifungsschicht. Die zweite Schicht 30 wird an der zweiten Hauptseite 38 mit einer Heißschmelzkleberschicht 52 ausgestattet. Nach einer ersten Variante dieser bevorzugten Ausführungsform wird zunächst die zweite Schicht 30 erwärmt, so dass sich diese unter den Aufschmelzbedingungen den Konturen der eine Kontur aufweisenden Fläche des Bauteils 8 anpasst. Während dieses Anpassungsprozesses reagiert die insbesondere thermoreaktive zweite Schicht 30 aus beispielsweise Expoxid-, Phenol-, Formaldehyd-Harz oder PU aus. Anschließend kann die erste Schicht 20 ebenfalls unter Erwärmung aufgebracht werden. Nach einer anderen Variante werden beide Schichten gleichzeitig erwärmt und passen sich so der Oberflächenkontur des Bauteils 8 an und reagieren durch die Wärmebehandlung aus.

Gemäß einer weiteren bevorzugten Ausführungsform der vorliegenden Erfindung weist die schalldämpfende Sandwichplatte 10 eine erste Schicht 20 aus Bitumen-oder Kunststofffolie mit einer bevorzugten Dicke von ca. 1,5 bis 3 mm auf. Diese haben bevorzugte Dämpfungseigenschaften und können durch Aufbringung auf der zweiten Schicht 30 das Dämpfungsverhalten entsprechend positiv beeinflussen. Die zweite Schicht 30 wird mittels einer Heißschmelzkleberschicht 52 auf das Bauteil aufgesetzt und der Gesamtverbund wird erwärmt, so dass sich die erste und zweite Schicht den Konturen des Bauteils 8 anpassen und aufschmelzen kann. Gleichzeitig können auch hier thermoreaktive bzw. thermoplastische Schichten verwandt werden, die beim Erwärmen entsprechend ausreagieren.

Bevorzugt erfolgt die Erwärmung bei etwa 80 bis 190°C, besonders bevorzugt bei ca. 100 bis 140°C.

Allen vorstehend beschriebenen Beispielen der erfindungsgemäßen Sandwich-platte 10 ist gemeinsam, dass sie sehr gute Schalldämpfungs- bzw. Schalldämmungseigenschaften bei gleichzeitig sehr guten Wärmedämmungs-eigenschaften aufweisen.

Als weitere Beispiele für den Bitumen-Kunststoff-Schaum sind zu nennen:
1. Bitumen ca. 85 %, expandierende Hohlkörper ca. 5 %, Thermoplaste ca. 10 %;
2. Bitumen ca. 85 %, gemahlene Schäume ca. 5 %, Thermoplaste ca. 10 %;
3. Polystyrol ca. 85 %, expandierende Hohlkörper ca.5%, Weichmacher ca. 10%.

Es ist festzuhalten, dass die unter Bezug auf einzelne Beispiele der Erfindung beschriebenen Merkmale der Erfindung, wie beispielsweise die Ausgestaltung und Anordnung der einzelnen Schichten und deren Dichte sowie Dicke, die Flächengewichte sowie die verwendeten Materialien, auch bei anderen Beispielen einzeln oder kumulativ vorhanden sein können, außer wenn es anders angegeben ist oder sich aus technischen Gründen von selbst verbietet.

### Bezugszeichenliste:

- 8: Bauteil
- 10: Sandwichplatte
- 20: erste Schicht
- 30: zweite Schicht
- 32: erste Hauptseite
- 38: zweite Hauptseite
- 50: erste Kleberschicht
- 52: zweite Kleberschicht
- S1: zweite Scherkraft
- S2: erste Scherkraft

## Patentansprüche

1. Schalldämpfende Sandwichplatte (10), aufweisend
- eine erste Schicht (20) zur Schalldämpfung und/oder Schalldämmung und
- eine zweite Schicht (30) zur Entdröhnung und/oder thermischen Isolierung, die an ihrer ersten Hauptseite (32) mit der ersten Schicht (20) fest verbunden ist und mit ihrer zweiten Hauptseite (38) zur Verbindung mit einem akustisch zu verbessernden Bauteil (8) bestimmt ist,
wobei die zweite Schicht (30) eine Bitumen-Kunststoff-Schaumschicht mit einer Dichte von 0,25 bis 0,5 kg/dm³ ist, **dadurch gekennzeichnet, dass** die zweite Schicht (30) mit einer zweiten Klebeschicht (52) zur Anbindung an das Bauteil (8) versehen ist.

2. Sandwichplatte (10) nach Anspruch 1,
wobei die Bitumen-Kunststoff-Schaumschicht Silikat-Hohlkugeln umfasst.

3. Sandwichplatte (10) nach Anspruch 1 oder 2,
**dadurch gekennzeichnet, dass** die erste Schicht (20) einen Elastizitätsmodul aufweist, der mindestens um den Faktor 10, vorzugsweise mindestens um den Faktor 20, größer ist als der Elastizitätsmodul der zweiten Schicht (30).

4. Sandwichplatte (10) nach einem der vorhergehenden Ansprüche,
**dadurch gekennzeichnet, dass** die erste Schicht (20) mindestens eine Lage aus Aluminium oder eine thermoplastische bzw. thermoreaktive, insbesondere faserverstärkte Versteifungsschicht von 0,05 bis 0,5 mm, vorzugsweise 0,05 bis 0,15 mm Dicke oder eine Bitumenfolie bzw. Kunststofffolie von 0,05 bis 0,5 mm, vorzugsweise 1,5 bis 3,0 mm Dicke aufweist.

5. Sandwichplatte (10) nach einem der vorhergehenden Ansprüche,
**dadurch gekennzeichnet, dass** sie ein Flächengewicht von höchstens 2,5 kg/m², vorzugsweise höchstens 2 kg/m² und insbesondere 1,5 kg/m², aufweist.

6. Sandwichplatte (10) nach einem der vorhergehenden Ansprüche,
**dadurch gekennzeichnet, dass** die zweite Schicht (30) Hohlkugeln, insbesondere mit Luft gefüllte Hohlkugeln, aufweist.

7. Sandwichplatte (10) nach einem der vorhergehenden Ansprüche,
**dadurch gekennzeichnet, dass** die zweite Schicht (30) 50 % Bitumen, 35 % Silikat-Hohlkugeln, 5,0 % Zellulosefaser, 5,0 % Calciumoxid und 5,0 % Ethylenvinylacetat aufweist oder
dass die zweite Schicht (30) Polystyrol und/oder Polyvinylacetat und/oder PE und/oder PP und/oder Ethylenvinylacetat, insbesondere aus 40 % Polystyrol, 30 % Silikat-Hohlkugeln, 10 % Zellulosefasern, 19 % Weichmacher und 1,0 % Stabilisator aufweist.

8. Sandwichplatte (10) nach einem der vorhergehenden Ansprüche,
**dadurch gekennzeichnet, dass** die zweite Schicht (30) Treibmittel, vorzugsweise thermisch expandierende thermoplastische Kunststoffkörper, und/oder Füllstoffe zur Reduzierung des spezifischen Gewichts und der spezifischen Wärmekapazität der zweiten Schicht (30) enthält.

9. Sandwichplatte (10) nach einem der vorhergehenden Ansprüche,
**dadurch gekennzeichnet, dass** die zweite Schicht (30) Thermoplaste, vorzugsweise EVA, PE, PP, und/oder Kohlenwasserstoff-Harze enthält.

10. Sandwichplatte (10) nach einem der vorhergehenden Ansprüche,
**dadurch gekennzeichnet, dass** die erste Schicht (20) eine thermoplastische oder thermoreaktive, insbesondere faserverstärkte Versteifungsschicht, insbesondere aus Epoxid-, Phenol- oder Formaldehyd-Harz, Polyurethan oder Polystyrol, ist.

11. Verfahren zum Anbringen einer schalldämpfenden Sandwichplatte (10) mit einer ersten Schicht (20) zur Schalldämpfung und/oder Schalldämmung und einer zweiten Schicht (30) zur Entdröhnung und/oder thermischen Isolierung, die an ihrer ersten Hauptseite (32) mit der ersten Schicht (20) fest verbunden ist und mit ihrer zweiten Hauptseite (38) zur Verbindung mit einem akustisch zu verbessernden Bauteil (8) mit planen Flächen bestimmt ist, zum Anbringen einer schalldämpfenden Sandwichplatte (10) gemäß einem der Ansprüche 1 bis 15, an dem akustisch zu verbessernden Bauteil (8), **dadurch gekennzeichnet, dass** die Sandwichplatte (10), die eine erste Schicht (20), die vorzugsweise aus Aluminium, Stahl, oder faserverstärktem Kunststoff sowie vorzugsweise mit einer Dicke von 0,05 - 0,5 mm gebildet ist, sowie eine mit der ersten Schicht (20) verbundene zweite Schicht (30) aufweist, an der dem Bauteil (8) zugewandten Hauptseite (38) der zweiten Schicht (30) mittels einer Kleberschicht (52) aus Haftkleber oder Heißschmelzkleber an dem Bauteil (8) befestigt wird wobei die zweite Schicht (30) eine Bitumen-Kunststoff-Schaumschicht mit einer Dichte von 0,25 bis 0,5 kg/dm³ ist.

12. Verfahren zum Anbringen einer schalldämpfenden Sandwichplatte (10) mit einer ersten Schicht (20) zur Schalldämpfung und/oder Schalldämmung und einer zweiten Schicht (30) zur Entdröhnung und/oder thermischen Isolierung, die an ihrer ersten Hauptseite (32) mit der ersten Schicht (20) fest verbunden ist und mit ihrer zweiten Hauptseite (38) zur Verbindung mit einem akustisch zu verbessernden Bauteil (8) mit Flächen bestimmt ist, die Konturen wie insbesondere Sicken aufweisen, zum Anbringen einer schalldämpfenden Sandwichplatte (10) gemäß einem der Ansprüche 1 bis 15, an dem akustisch zu verbessernden Bauteil (8),
**dadurch gekennzeichnet, dass** die Sandwichplatte (10), die eine erste Schicht (20), die vorzugsweise als eine thermoplastische oder thermoreaktive Versteifungsschicht, insbesondere aus Epoxid-, Phenol- oder Formaldehyd-Harz, Polyurethan oder Polystyrol sowie vorzugsweise mit einer Dicke von 0,05 - 1 mm, gebildet ist, sowie eine mit der ersten Schicht (20) verbundene zweite Schicht (30) aufweist, an der dem Bauteil (8) zugewandten Hauptseite (38) der zweiten Schicht (30) mittels einer Heißschmelzkleberschicht (52) an der Konturen aufweisenden Fläche des Bauteils (8) befestigt wird,
wobei sich die Sandwichplatte (10) unter Aufschmelzbedingungen wie insbesondere einem Temperaturbereich zwischen 80 und 190 °C an die Konturen anpasst und die thermoreaktive Versteifungsschicht ausreagiert oder sich die Sandwichplatte (10) in einem Temperaturbereich zwischen 80 und 190 °C an die Konturen anpasst und die Heißschmelzkleberschicht (52) aufschmilzt, wobei die zweite Schicht (30) eine Bitumen-Kunststoff-Schaumschicht mit einer Dichte von 0,25 bis 0,5 kg/dm³ ist.

## Claims

1. Sound-attenuating sandwich sheet (10), comprising
- a first layer (20) for sound-attenuation and/or acoustic insulation and
- a second layer (30) for acoustic damping and/or thermal insulation, which is fixedly connected at its first main side (32) to the first layer (20), and which is intended for connection, by its second main side (38), to a component (8) which requires acoustic improvement,
where the second layer (30) is a bitumen-plastic-foam layer with density 0.25 to 0.5 kg/dm³, **characterized in that** a second adhesive layer (52) has been provided to the second layer (30) for bonding to the component (8).

2. Sandwich sheet (10) according to Claim 1,
where the bitumen-plastic-foam layer comprises hollow silicate spheres.

3. Sandwich sheet (10) according to Claim 1 or 2,
**characterized in that** the modulus of elasticity of the first layer (20) is greater by at least a factor of 10, preferably at least a factor of 20, than the modulus of elasticity of the second layer (30).

4. Sandwich sheet (10) according to any of the preceding claims,
**characterized in that** the first layer (20) comprises at least one ply made of aluminium, or comprises a thermoplastic or thermoreactive, in particular fibre-reinforced reinforcing layer of thickness Q0.05 to 0.5 mm, preferably Q0.05 to 0.15 mm, or comprises a bitumen film or, respectively, plastics film of thickness Q0.05 to 0.5 mm, preferably 1.5 to 3.0 mm.

5. Sandwich sheet (10) according to any of the preceding claims,
**characterized in that** its weight per unit area is at most 2.5 kg/m², preferably at most 2 kg/m² and in particular 1.5 kg/m².

6. Sandwich sheet (10) according to any of the preceding claims,
**characterized in that** the second layer (30) comprises hollow spheres, in particular air-filled hollow spheres.

7. Sandwich sheet (10) according to any of the preceding claims,
**characterized in that** the second layer (30) comprises 50% of bitumen, 35% of hollow silicate spheres, 5.0% of cellulose fibre, 5.0% of calcium oxide and 5.0% of ethylene-vinyl acetate, or
**in that** the second layer (30) comprises polystyrene and/or polyvinyl acetate and/or PE and/or PP and/or ethylene-vinyl acetate, in particular made of 40% of polystyrene, 30% of hollow silicate spheres, 10% of cellulose fibres, 19% of plasticizer and 1.0% of stabilizer.

8. Sandwich sheet (10) according to any of the preceding claims,
**characterized in that** the second layer (30) comprises blowing agents, preferably thermally expanding thermoplastic bodies, and/or filters, to reduce the density and specific heat capacity of the second layer (30).

9. Sandwich sheet (10) according to any of the preceding claims,
**characterized in that** the second layer (30) comprises thermoplastics, preferably EVA, PE, PP, and/or hydrocarbon resins.

10. Sandwich sheet (10) according to any of the preceding claims,
**characterized in that** the first layer (20) is a thermoplastic or thermoreactive, in particular fibre-reinforced reinforcing layer, in particular made of epoxy resin, phenolic resin or formaldehyde resin, polyurethane or polystyrene.

11. Process for the attachment of a sound-attenuating sandwich sheet (10) with a first layer (20) for sound-attenuation and/or acoustic insulation and a second layer (30) for acoustic damping and/or thermal insulation, which is fixedly connected at its first main side (32) to the first layer (20), and which is intended for connection, by its second main side (38), to a component (8) which requires acoustic improvement and which has flat areas, for the attachment of a sound-attenuating sandwich sheet (10) according to any of Claims 1 to 15 on the component (8) which requires acoustic improvement,
**characterized in that** the sandwich sheet (10), which comprises a first layer (20) preferably composed of aluminium, steel, or fibre-reinforced plastic, the thickness thereof preferably being 0.05 - 0.5 mm, and which also comprises a second layer (30) connected to the first layer (20), is secured on the component (8) by means of an adhesive layer (52) made of pressure-sensitive adhesive or hotmelt adhesive at that main side (38) of the second layer (30) that faces towards the component (8), where the second layer (30) is a bitumen-plastic-foam layer with density 0.25 to 0.5 kg/dm³.

12. Process for the attachment of a sound-attenuating sandwich sheet (10) with a first layer (20) for sound-attenuation and/or acoustic insulation and a second layer (30) for acoustic damping and/or thermal insulation, which is fixedly connected at its first main side (32) to the first layer (20), and which is intended for connection by its second main side (38) to a component (8) which requires acoustic improvement and which has areas comprising contoured features such as in particular linear contoured features, for the attachment of a sound-attenuating sandwich sheet (10) according to any of Claims 1 to 15 on the component (8) which requires acoustic improvement,
**characterized in that** the sandwich sheet (10), which comprises a first layer (20) preferably configured as a thermoplastic or thermoreactive reinforcing layer, in particular made of epoxy resin, phenolic resin or formaldehyde resin, polyurethane or polystyrene, the thickness thereof preferably being 0.05 - 1 mm, and which also comprises a second layer (30) connected to the first layer (20), is secured by means of a hotmelt adhesive layer (52) on that area of the component (8) that comprises the contoured features on that main side (38) of the second layer (30) that faces towards the component (8),
where, under melting conditions such as in particular a temperature range between 80 and 190°C, the sandwich sheet (10) adapts itself to the contoured features, and the thermoreactive reinforcing layer reacts to completion or, in a temperature range between 80 and 190°C, the sandwich sheet (10) adapts itself to the contoured features and the hotmelt adhesive layer (52) melts, where the second layer (30) is a bitumen-plastic-foam layer with density 0.25 to 0.5 kg/dm³.

## Revendications

1. Panneau sandwich insonorisant (10), comprenant
- une première couche (20) d'absorption acoustique et/ou d'isolation acoustique et
- une deuxième couche (30) d'insonorisation et/ou d'isolation thermique qui est reliée solidement sur son premier côté principal (32) à la première couche (20) et qui est destinée à être reliée, par son deuxième côté principal (38), à un composant (8) à améliorer du point de vue acoustique, la deuxième couche (30) étant une couche de mousse de matière plastique et de bitume d'une densité allant de 0,25 à 0,5 kg/dm³, **caractérisé en ce que** la deuxième couche (30) est pourvue d'une deuxième couche adhésive (52) destinée à être reliée au composant (8).

2. Panneau sandwich (10) selon la revendication 1, la couche de mousse de matière synthétique et de bitume comprend des billes de silicate creuses.

3. Panneau sandwich (10) selon la revendication 1 ou 2,
**caractérisé en ce que** la première couche (20) a un module d'élasticité qui est supérieur, d'au moins un facteur 10, de préférence d'au moins un facteur 20, au module d'élasticité de la deuxième couche (30).

4. Panneau sandwich (10) selon l'une des revendications précédentes,
**caractérisé en ce que** la première couche (20) comporte au moins une couche d'aluminium ou une couche de renfort thermoplastique ou thermoréactive, notamment renforcée de fibres de 0,05 à 0,5 mm,
de préférence de 0,05 à 0,15 mm d'épaisseur ou d'un film de bitume ou d'un film de matière synthétique de 0,05 à 0,5 mm, de préférence de 1,5 à 3,0 mm d'épaisseur.

5. Panneau sandwich (10) selon l'une des revendications précédentes, **caractérisé en ce qu'**il a un poids surfacique de 2,5 kg/m² maximum, de préférence de 2 kg/m² maximum et notamment de 1,5 kg/m².

6. Panneau sandwich (10) selon l'une des revendications précédentes, **caractérisé en ce que** la deuxième couche (30) comporte des sphères creuses, notamment des sphères creuses remplies d'air.

7. Panneau sandwich (10) selon l'une des revendications précédentes, **caractérisé en ce que** la deuxième couche (30) comprend 50 % de bitume, 35 % de sphères de silicate creuses, 5,0 % de fibre de cellulose, 5,0 % d'oxyde de calcium et 5,0 % d'éthylène-acétate de vinyle ou **en ce que**
la deuxième couche (30) comprend du polystyrène et/ou de l'acétate de polyvinyle et/ou du PE et/ou du PP et/ou de l'éthylène-acétate de vinyle, en particulier composée de 40 % de polystyrène, 30 % de sphères de silicate creuses, environ 10 % de fibres de cellulose, 19 % de plastifiants et 1,0 % de stabilisateur.

8. Panneau sandwich (10) selon l'une des revendications précédentes, **caractérisé en ce que** la deuxième couche (30) contient des agents gonflants, de préférence des corps de matière thermoplastique thermiquement expansibles, et/ou des charges pour réduire le poids spécifique et la capacité thermique spécifique de la deuxième couche (30).

9. Panneau sandwich (10) selon l'une des revendications précédentes, **caractérisé en ce que** la deuxième couche (30) contient des matières thermoplastiques, de préférence EVA, PE, PP et/ou des résines hydrocarbonées.

10. Panneau sandwich (10) selon l'une des revendications précédentes,
**caractérisé en ce que** la première couche (20) est une couche thermoplastique ou thermoréactive, en particulier renforcée de fibres, en particulier en résine époxy, phénolique ou de formaldéhyde, en polyuréthane ou en polystyrène.

11. Procédé de fixation d'un panneau sandwich insonorisant (10) comprenant une première couche (20) d'absorption acoustique et/ou d'isolation acoustique et une deuxième couche (30) d'insonorisation et/ou d'isolation thermique qui est reliée solidement sur son premier côté principal (32) à la première couche (20) et qui est destinée à être reliée, par son deuxième côté principal (38), à un composant (8) à améliorer du point de vue acoustique qui est pourvu de surface planes, pour fixer un panneau sandwich insonorisant (10) selon l'une des revendications 1 à 15 sur le composant (8) à améliorer du point de vue acoustique,
**caractérisé en ce que** le panneau sandwich (10), qui comporte une première couche (20), formée de préférence en aluminium, en acier ou en matière synthétique renforcée de fibres et ayant de préférence une épaisseur de 0,05 à 0,5 mm, et une deuxième couche (30) reliée à la première couche (20), est fixé au composant (8) sur le côté principal (38), dirigé vers le composant (8), de la deuxième couche (30), au moyen d'une couche adhésive (52) formée d'un autoadhésif ou d'un adhésif thermofusible, la deuxième couche (30) étant une couche de mousse de matière synthétique et de bitume d'une densité de 0,25 à 0,5 kg/dm³.

12. Procédé de fixation d'un panneau sandwich insonorisant (10) comprenant une première couche (20) d'absorption acoustique et/ou d'isolation acoustique et une deuxième couche (30) d'insonorisation et/ou d'isolation thermique qui est reliée solidement sur son premier côté principal (32) à la première couche (20) et qui est destinée à être reliée, par son deuxième côté principal (38), à un composant (8) à améliorer du point de vue acoustique qui est pourvu de surfaces qui comportent des contours, en particulier des moulures, pour la fixation d'un panneau sandwich insonorisant (10) selon l'une des revendications 1 à 15 sur le composant (8) à améliorer de point de vue acoustique,
**caractérisé en ce que** le panneau sandwich (10), qui comporte une première couche (20), formée de préférence d'une couche de renfort thermoplastique ou thermoréactive, en particulier en résine époxy, phénolique ou de formaldéhyde, en polyuréthane ou en polystyrène et ayant de préférence une épaisseur de 0,05 à 1 mm, et une deuxième couche (30) reliée à la première couche (20), est fixé au côté principal (38), dirigé vers le composant (8), de la deuxième couche (30) au moyen d'une couche adhésive thermofusible (52) à la surface, pourvue de contours, du composant (8), le panneau sandwich (10) s'adaptant aux contours dans des conditions de fusion telles que notamment une température comprise entre 80 et 190 °C et la couche de renfort thermoréactive réagissant ou le panneau sandwich (10) s'adaptant aux contours dans une plage de température comprise entre 80 et 190 °C et la couche adhésive thermofusible (52) fondant, la deuxième couche (30) étant une couche de mousse de matière synthétique et de bitume d'une densité allant de 0,25 à 0,5 kg/dm³.
